# EUROPÄISCHE PATENTSCHRIFT

(11) **EP 0 681 126 B1**
(45) Veröffentlichungstag und Bekanntmachung des Hinweises auf die Patenterteilung: **17.06.1998**
(21) Anmeldenummer: 95105066.5
(22) Anmeldetag: 05.04.1995
(51) Int. Cl.: F16K 17/06

(54) **Vorrichtung zum Einstellen der Vorspannung einer Belastungsfeder eines federbelasteten Ventils**
Tension adjusting device for the spring of a spring loaded valve
Dispositif d'ajustage de la prétension pour le ressort d'une soupape à ressort

(30) Priorität: 06.05.1994 DE 4416028
(43) Veröffentlichungstag der Anmeldung: 08.11.1995
(73) Patentinhaber: HANS SASSERATH & CO KG, D-41352 Korschenbroich (DE)
(72) Erfinder: Hecking, Willi, D-41238 Mönchengladbach (DE)
(74) Vertreter: Weisse, Jürgen, Dipl.-Phys. Patentanwalt

(56) Entgegenhaltungen:
- AT-B- 189 466
- CH-A- 234 196
- CH-A- 641 260
- DE-C- 823 382
- DE-U- 7 633 935
- DE-U- 8 903 626

## Beschreibung

Die Erfindung betrifft ein federbelastetes Ventil, enthaltend
(a) einen Ventilteller,
(b) eine Federteller,
(c) eine Belastungsfeder, welche an dem Ventilteller anliegt und sich an dem Federteller abstützt,
(d) eine Stellspindel zum Verstellen des Federtellers,
(e) einen Einstellgriff zum Verstellen der Stellspindel, und
(f) eine skalierte Anzeigeeinrichtung, an welcher die Stellung des Federtellers als Maß für die Vorspannung der Belastungsfeder ablesbar ist.

Beispiele für solche federbelasteten Ventile sind Druckmindererventile. Dort wird durch die Belastungsfeder eine Membran belastet. An der Membran wirkt ein Ausgangsdruck der Belastungsfeder entgegen. Die Membran verstellt ein Ventil, das einen Durchgang von einem Druckmitteleingang zu einem Druckmittelausgang beherrscht. In ähnlicher Weise wirken Druckregler.

Bei solchen und ähnlichen federbelasteten Ventilen wird die Vorspannung der Belastungsfeder mit Hilfe eines Manometers eingestellt. Die Einstellung erfolgt üblicherweise werkseitig beim Hersteller. Es ist aber auch bekannt, an dem Gehäuse des Geräts einen Manometeranschluß vorzusehen.

Durch die DE U-89 03 626 ist ein Überströmventil für Warmwasserheizungen bekannt. Das Überströmventil weist einen Ventilsitz auf, auf dem ein Ventilkörper aufliegen kann. Eine Federbasis ist mit einem drehbaren ersten Ventilspindelteil verbunden. Ein zweites Ventilspindelteil ist verschieblich in einer Bohrung des ersten Ventilspindelteils geführt und an dem Ventilkörper befestigt. An der Federbasis stützt sich eine Druckfeder ab, die andererseits auf dem Ventilkörper aufliegt. An dem ersten Ventilspindelteil ist eine Einstellkappe drehfest befestigt. An einem Gehäuseteil ist ein Anzeigeteil angeordnet, an welcher die Stellung der Federbasis als Maß für die Vorspannung der Druckfeder ablesbar ist.

Durch Verdrehen der Einstellkappe wird das erste Ventilspindelteil mitgedreht. Dadurch verschiebt sich die Federbasis in Längsrichtung, wodurch die Vorspannung der Druckfeder verändert wird. Gleichzeitig verscheibt sich das Anzeigeteil in Längsrichtung. Durch eine Sicherungsschraube an der Einstellkappe wird bei dessen Festziehen die Einstellkappe derart auf ein Gehäuseteil gepreßt, daß ein unbeabsichtiges Verdrehen der Einstellkappe nicht möglich ist.

In der DE U-89 03 626 sind drei Ausführungsbeispiele der Wirkverbindung zwischen Einstellkappe und Anzeigeteil beschrieben. In einem ersten Ausführungsbeispiel steht das Anzeigeteil als Anzeigemutter mit einem Gehäuseteil über ein Gewinde in Verbindung. Weiterhin ist die Anzeigemutter über einen Mehrkant mit der Einstellkappe verbunden. Wenn die Einstellkappe verdreht wird, um die Federbasis zu verstellen, wird die Anzeigemutter über den Mehrkant mitgedreht. Da die Anzeigemutter über das Gewinde mit dem Gehäuseteil verbunden ist, ist mit dieser Verdrehung der Anzeigemutter eine Längsverschiebung der Anzeigemutter längs des Gehäuseteils verbunden. Die Anzeigemutter führt also eine mit der Verschiebung der Federbasis korrespondierende Verschiebung durch. Die Federbasis und die Anzeigemutter verschieben sich dabei in gleicher Richtung. Durch die Wahl der Steigung des Gewindes kann dabei die Wegänderung von Anzeigemutter und Federbasis, abhängig von der Drehung, beeinflußt werden. In einem zweiten Ausführungsbeispiel steht das Anzeigeteil mit dem Gehäuseteil über einen Mehrkant in Verbindung. Weiterhin ist das Anzeigeteil über ein Gewinde mit der Einstellkappe verbunden. Hier wird die Verschiebung des Anzeigeteils beim Drehen der Einstellkappe durch das Gewinde bewirkt, wobei das Anzeigeteil nicht mitgedreht wird, sondern durch den Mehrkant längsverschieblich auf dem Gehäuseteil gelagert ist. In einem dritten Ausführungsbeispiel steht das Anzeigeteil wie beim ersten Ausführungsbeispiel mit dem Gehäuseteil über ein Gewinde in Verbindung. Das Anzeigeteil weist an seinem Außenumfang eine glatte Oberfläche auf, die mit einer glatten Oberfläche des inneren der Einstellkappe zusammenwirkt. Die Mitnahme des Anzeigteils erfolgt durch einen Nocken, der in einem Fenster der Einstellkappe eingreift. Bei der Drehung der Einstellkappe wird also das Anzeigeteil mitgedreht. Die Längsverschiebung des Anzeigeteils erfolgt durch das Gewinde. Der Nocken dient dabei zugleich als Markierung, die abhängig von der Drehstellung der Einstellkappe in einem Sichtfenster linear veschieblich wandert.

In der CH-A-641 260 ist ein Druckbegrenzungsventil für hydraulische Steuerungen beschrieben. Ein Ventilkegel ist zulaufseitig mit einem Dämpfungskolben verbunden. Zwei koaxiale Schraubenfedern stützen sich einerseits an Schultern des Ventilkegels und andererseits an Schultern einer axial verstellbaren Einstellspindel ab. Während des Einstellhubs der Einstellspindel werden die Feder gespannt, wobei jeder Stellung der Einstellspindel ein bestimmten Druck auf der Zulaufseite des Ventils entspricht. Die Einstellung der Einstellspindel erfolgt mittels eines Drehgriffs, dem ein Zählwerk mit Digitalanzeige zugeordnet ist, wobei die Digitalanzeige den eingestellten Hub der Einstellspindel wiedergibt. Ein Antriebsrad des Zählwerks ist über eine Stirnverzahnung mit dem Drehgriff gekuppelt. Das Zählwerk ist in einem Zählwerkträger angeordnet, der mit einer Axialrippe den Drehgriff übergreift und mit einer dem Drehgriff als Anschlag dienenden Sicherungshülse verschraubt ist. in einer Führungsbüchse drehfest gehalten ist.

Sowohl bei dem in der DE U-89 03 626 als auch in der CH-A641 260 beschriebenen Ventil steht die Anzeige der jeweils vorgesehenen Anzeigevorrichtung in direktem Zusammenhang mit der Drehstellung der Einstellkappe bzw. des Drehgriffs und nur indirekt mit der Vorspannung der Feder. Sollte durch Verschleiß der Teile oder Defekte der Übertragung zwischen Einstellkappe bzw. Drehgriff und Feder die Vorspannung der Feder der Drehstellung der Einstellkappe bzw. des Drehgriffs nicht genau entsprechen, dann wird also nicht, wie gewünscht, die Vorspannung der Feder, sondern lediglich die Drehstellung der Einstellkappe bzw. des Drehgriffs angezeigt.

Der Erfindung liegt die Aufgabe zugrunde, die Genauigkeit und Zuverlässigkeit der Anzeige der Einstellung der Belastungsfeder bei federbelasteten Ventilen zu erhöhen.

Erfindungsgemäß wird diese Aufgabe dadurch gelöst, daß
(g) die Bewegung des Federtellers über ein Übersetzungsgetriebe auf ein Anzeigeglied der Anzeigeeinrichtung übertragbar ist,
(h) das Anzeigeglied ein mit einer Skala versehenes Anzeigerad ist, das außermittig zu der Stellspindel in einem die Belastungsfeder und den Federteller umschließenden Federgehäuse gelagert ist, und
(i) das Übersetzungsgetriebe eine mit dem Anzeigerad verbundene Steilgewinde-Spindel ist, die in einem dazu komplementären Innengewinde des Federtellers geführt ist.

Durch die direkte Verbindung des Anzeigerads mit dem Federteller wird also die Bewegung des Federtellers und somit die Vorspannung der Belastungsfeder direkt angezeigt.

Eine solche Einrichtung kann dann einmal werksseitig geeicht werden. Es ist dann dem Installateur vor Ort möglich, die Vorspannung auf einen gewünschten Wert einzustellen, der einem gewünschten Druck des Druckmittels entspricht.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: zeigt einen Vertikalschnitt durch eine Vorrichtung zur Einstellung der Vorspannung einer Belastungsfeder für ein Ventil längs der Linie A - A von Fig.2.
- Fig.2: ist eine Ansicht in Richtung "X" von Fig.1.
- Fig.3: ist eine abgebrochene Schnittansicht längs der Linie B-B von Fig.1.
- Fig.4: ist ein Schnitt längs der Linie C - C von Fig.1.

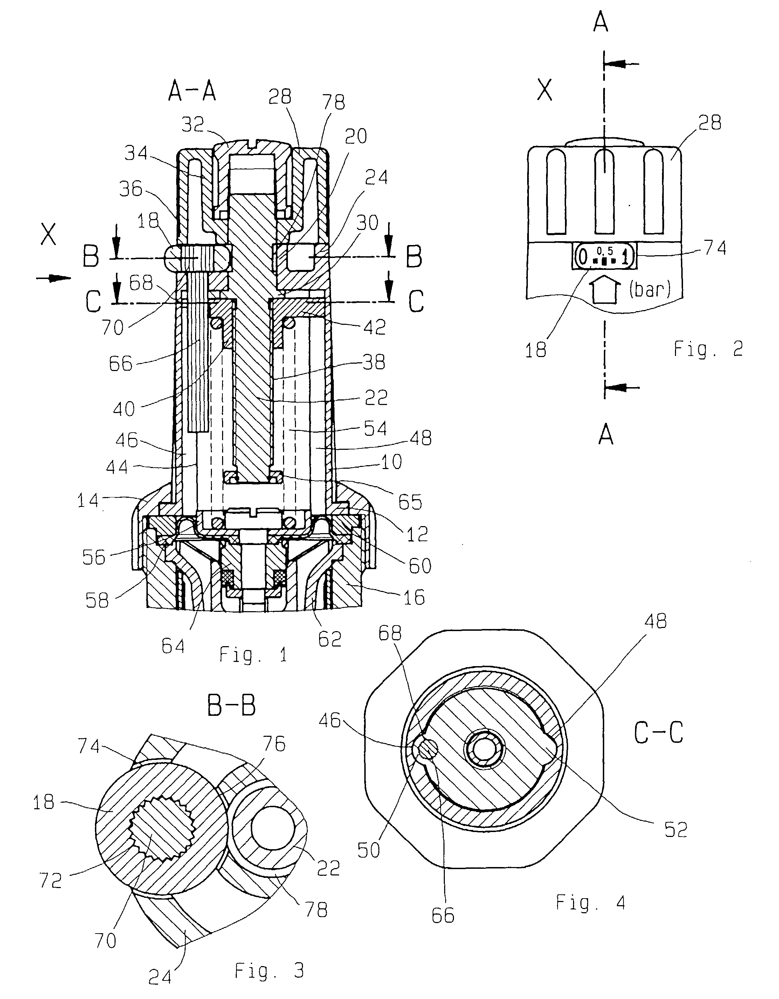

In Fig.1 ist mit 10 ein umgekehrt-topfförmiges Federgehäuse bezeichnet. Das Federgehäuse 10 hat längs seines Randes einen Flansch 12. Das Federgehäuse 10 ist mittels einer Überwurfmutter 14 mit einem Stutzen 16 eines Gerätegehäuses verbunden. Die Überwurfmutter 14 greift dabei über den Flansch 12. Die Überwurfmutter 14 gestattet eine Verdrehung des Federgehäuses 10 so, daß ein Anzeigerad 18 bequem sichtbar ist.

Der "Boden" des topfförmigen Federgehäuses 10 bildet in der Mitte ein Lager 20 für eine Stellspindel 22. Längs des Umfangs ist an dem "Boden" ein Rand 24 gebildet.

Die Stellspindel 22 weist oberhalb des Lagers 20 einen Mehrkant 26 auf. Auf dem Mehrkant 26 sitzt ein Einstellgriff 28. Unterhalb des "Bodens" bildet die Stellspindel 22 einen Bund 30. Der Bund 30 liegt an der Innenseite des "Bodens" des umgekehrt-topfförmigen Federgehäuses 10 an. Der Einstellgriff 28 ist durch eine auf das obere Ende der Stellspindel 22 aufgeschraubte Kappe 32 gesichert. Die Kappe 32 sitzt in einem eingezogenen Mittelteil 34 des Einstellgriffs 28. Durch den Einstellgriff 28 kann die Stellspindel 22 gedreht werden. Durch Festziehen der Kappe 32 kann der Rand 36 des Einstellgriffs gegen den Rand 24 des Federgehäuses 10 festgezogen werden. Dabei legt sich der Bund 30 der Stellspindel 22 gegen die Innenseite des "Bodens" des Federgehäuses 10. Dadurch ist die Einstellung des Einstellgriffs 28 fixiert.

Die Stellspindel 22 weist in bekannter Weise ein Gewinde 38 auf. Auf diesem Gewinde 38 ist eine Nabe 40 eines Federtellers 42 geführt. Der Federteller 42 ist im wesentlichen kreisförmig und in der zylindrischen Innenwand 44 des Federgehäuses 10 geführt. In der Innenwand 44 sind zwei diametral gegenüberliegende Nuten 46 und 48 angebracht. In die Nuten 46 und 48 greifen dazu komplementäre, radiale Vorsprünge 50 bzw 52 des Federtellers 42 ein. Dadurch ist der Federteller 42 unverdrehbar geführt. An dem Federteller 42 stützt sich eine vorgespannte Schraubenfeder 54 ab.

Die Schraubenfeder 54 drückt auf einen Membranteller 56 einer Membran 58. Die Membran 58 ist zwischen einem im Stutzen 16 durch die Überwurfmutter 14 gehaltenen Ring 60 und einem Zwischengehäuse 62 eingespannt. Mit der Membran 58 und dem Membranteller 56 ist ein Ventilstößel 64 eines -nicht im einzelnen dargestellten und beschriebenen- federbelasteten Ventils, z.B. eines Druckminderers, verbunden. Durch Drehen des Einstellgriffs 28 und damit der Stellspindel 22 kann über das Gewinde 38 der unverdrehbar geführte Federteller 42 axial verstellt werden. Dadurch wird die Vorspannung der Schraubenfeder 54 verändert und damit z.B. der zu regelnde Druck. Der Hub des Federtellers 42 ist durch einen Anschlagring 65 am unteren Ende der Stellspindel 22 begrenzt. Wenn der Federteller 42 eingestellt ist, wird die Kappe 32 festgezogen. Dadurch wird der Einstellgriff 28, wie oben beschrieben, in seiner Stellung fixiert. Der Druck kann dann nicht mehr unbeabsichtigt verstellt werden.

In dem "Boden" des umgekehrt-topfförmigen Federgehäuses ist eine Steilgewinde-Spindel 66 drehbar gelagert. Die Steilgewinde-Spindel 66 weist auf ihrer Mantelfläche eine Steilgewinde-Verzahnung auf. Die Steilgewinde-Spindel ist mit der Steilgewinde-Verzahnung in einer mit einem entsprechenden Steilgewinde versehenen, axialen Gewindebohrung 68 des Federtellers 42 geführt. Am oberen Ende der Steilgewinde-Spindel 66 sitzt oberhalb des "Bodens" des umgekehrt-topfförmigen Federgehäuses 10 ein Verzahnungskopf 70. Auf diesem Verzahnungskopf 70 sitzt das mit einer entsprechenden Innenverzahnung 72 versehene Anzeigerad 18. Das Anzeigerad 18 ragt durch einen Ausschnitt 74 in dem Rand 24 hindurch. Das Anzeigerad erstreckt sich auch einwärts durch einen Ausschnitt 76 des Lagers 20 hindurch in eine Ringnut 78 der Stellspindel 22. Der Umfang des Anzeigerades ist wesentlich größer als der maximale Hub des Federtellers 22. Die Steilgewinde-Verzahnung an der Steilgewinde-Spindel 66 und die Gewindebohrung 68 bilden somit ein Übersetzungsgetriebe. Das erhöht die Genauigkeit der Einstellung des Druckes.

Nach Lösen der Kappe 32 kann der Einstellgriff 28 von der Stellspindel 22 abgezogen werden. Es ist dann möglich, das Anzeigerad 18 von dem Verzahnungskopf 70 nach oben in Fig.1 abzuziehen und in einer winkelversetzten Stellung wieder aufzustecken. Dadurch ist es möglich, das Anzeigerad 18 zu "eichen". Es wird mittels der Stellspindel 22 ein bestimmter, durch ein Manometer gemessener Druck eingestellt. Das Anzeigerad 18 wird dann mit seiner Innenverzahnung 72 in einer solchen Winkellage auf den Verzahnungskopf 70 aufgesetzt, daß dieser an dem Manometer angezeigte Druck auch von dem Anzeigerad 18 angezeigt wird. Dann wird der Einstellgriff 28 wieder aufgesetzt und mittels der Kappe 32 gesichert. Die Skala auf dem Anzeigerad 18 wird an die Kennlinie der Schraubenfeder 54 abgestimmt.

## Patentansprüche

1. Federbelastetes Ventil, enthaltend
(a) einen Ventilteller (56),
(b) eine Federteller (42),
(c) eine Belastungsfeder (54), welche an dem Ventilteller (56) anliegt und sich an dem Federteller (42) abstützt,
(d) eine Stellspindel (22) zum Verstellen des Federtellers (42),
(e) einen Einstellgriff (28) zum Verstellen der Stellspindel (22), und
(f) eine skalierte Anzeigeeinrichtung, an welcher die Stellung des Federtellers (42) als Maß für die Vorspannung der Belastungsfeder (54) ablesbar ist,
**dadurch gekennzeichnet, daß**
(g) die Bewegung des Federtellers (42) über ein Übersetzungsgetriebe (66,68) auf ein Anzeigeglied (18) der Anzeigeeinrichtung übertragbar ist,
(h) das Anzeigeglied ein mit einer Skala versehenes Anzeigerad (18) ist, das außermittig zu der Stellspindel (22) in einem die Belastungsfeder (54) und den Federteller (42) umschließenden Federgehäuse (10) gelagert ist, und
(i) das Übersetzungsgetriebe eine mit dem Anzeigerad (18) verbundene Steilgewinde-Spindel (66) ist, die in einem dazu komplementären Innengewinde des Federtellers (42) geführt ist.

2. Vorrichtung nach Anspruch 1, **dadurch gekennzeichnet, daß** das Steilgewinde an der Steilgewinde-Spindel (66) von einer Steilgewinde-Verzahnung gebildet ist die in einer dazu komplementären Gewindebohrung des Federtellers (42) geführt ist.

3. Vorrichtung nach Anspruch 1 oder 2, **dadurch gekennzeichnet, daß**
(a) an dem aus dem Federgehäuse (10) herausragenden Ende der Steilgewinde-Spindel (66) ein mit einer Außenverzahnung versehener Verzahnungskopf (70) sitzt und
(b) das Anzeigerad (18) einen Durchbruch mit einer Innenverzahnung (72) aufweist, die umsetzbar auf die Außenverzahnung des Verzahnungskopfes (70) aufgesetzt ist.

## Claims

1. Spring-loaded valve, comprising
(a) a valve disc (56),
(b) a spring plate (42),
(c) a load spring (54), engaging the valve plate (56) and supported by the spring plate (42),
(d) an adjusting spindle (22) for adjusting the spring plate (42),
(e) an adjusting handle (28) for adjusting the adjusting spindle (22), and
(f) a scaled display device arranged to allow to read the position of the spring plate (42) as a measure for the bias of the load spring (54),
characterized in that
(g) the displacement of the spring plate (42) is adapted to be transmitted through a step-up gear (66,68) to a display member (18) of the display device,
(h) the display member is a display wheel (18) provided with a scale and mounted eccentrically relatively to the adjusting spindle (22) in a spring housing (10) surrounding the load spring (54) and the spring plate (42), and
(i) the transmission gear is a pitch gear spindle (66) connected to the display wheel (18) and guided in an inner gear of the spring plate (42) complementary thereto.

2. Device as set forth in claim, **characterized in that** the pitch gear spindle (66) is formed by a pitch gear toothing guided in a threaded bore of the spring plate (42) complementary thereto.

3. Device as set forth in claim 1 or 2, **characterized in that**
(a) a toothing head (70) provided with an outer toothing is located at the end of the pitch gear spindle (66) projecting from the spring housing (10), and
(b) the display wheel (18) has an aperture with an inner toothing (72) positioned removably on the outer toothing of the toothing head (70).

## Revendications

1. Soupape commandée par ressort, comprenant
(a) un plateau de soupape (56),
(b) un plateau de ressort (42),
(c) un ressort de commande (54) qui est adjacent au plateau de soupape (56) et qui s'appuie au plateau de ressort (42),
(d) une tige de positionnement (22) destinée à déplacer le plateau de ressort (42),
(e) une manette de réglage (28) destinée à déplacer la tige de positionnement (22), et
(f) une installation d'indication graduée sur laquelle la position du plateau de ressort (42) est susceptible d'être lue en tant que mesure de la prétension du ressort de commande (54),
**caractérisée par le fait que**
(g) le mouvement du plateau de ressort (42) est susceptible d'être transmis à un membre d'indication (18) de l'installation d'indication par l'intermédiaire d'un multiplicateur (66,68),
(h) le membre d'indication est une roue d'indication (18) pourvue d'une échelle graduée qui est logée, de façon excentrique par rapport à la tige de positionnement (22), dans un boîtier de ressort (10) entourant le ressort de commande (54) et le plateau de ressort (42), et
(i) le multiplicateur est une tige à filetage à pas rapide (66) reliée à la roue d'indication (18) et guidée dans un filetage intérieur du plateau de ressort (42) complémentaire à celle-ci.

2. Dispositif selon la revendication 1, **caractérisé par le fait que** le filetage à pas rapide est formé à la tige à filetage à pas rapide (66) par une denture à filetage à pas rapide qui est guidée dans un taraudage du plateau de ressort (42) complémentaire à celle-ci.

3. Dispositif selon la revendication 1 ou 2, **caractérisé par le fait que**
(a) une tête de denture (70) pourvue d'une denture extérieure repose à l'extrémité de la tige à filetage à pas rapide (66) émergeant du boîtier de ressort (10) et
(b) la roue d'indication (18) présente un percement muni d'une denture intérieure (72) posée sur la denture extérieure de la tête de denture (70) de façon susceptible à être placée autrement.
